(19) 

Europäisches Patentamt
European Patent Office
Office européen des brevets

(11) **EP 4 501 471 A1**

(12) **EUROPEAN PATENT APPLICATION**
published in accordance with Art. 153(4) EPC

(43) Date of publication:
**05.02.2025  Bulletin 2025/06**

(21) Application number: **23779636.2**

(22) Date of filing: **15.03.2023**

(51) International Patent Classification (IPC):
*B05D 7/14* (2006.01)    *B05D 7/24* (2006.01)
*C08G 77/42* (2006.01)    *C09D 183/04* (2006.01)
*C09D 201/00* (2006.01)    *C08G 79/00* (2006.01)
*C09D 7/61* (2018.01)    *C09D 7/63* (2018.01)
*C09D 7/65* (2018.01)    *C23C 26/00* (2006.01)
*C09K 3/00* (2006.01)

(52) Cooperative Patent Classification (CPC):
**B05D 7/14; B05D 7/24; C08G 77/42; C08G 79/00;
C09D 7/61; C09D 7/63; C09D 7/65; C09D 183/04;
C09D 201/00; C09K 3/00; C23C 26/00**

(86) International application number:
**PCT/JP2023/010156**

(87) International publication number:
**WO 2023/189618 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.03.2022  JP 2022052515**

(71) Applicant: **Nihon Parkerizing Co., Ltd.
Tokyo 103-0027 (JP)**

(72) Inventors:
• **SATO,Takeshi**
  **Tokyo 103-0027 (JP)**
• **KAWAMURA,Kenta**
  **Tokyo 103-0027 (JP)**
• **IKO,Tomohiro**
  **Tokyo 103-0027 (JP)**

(74) Representative: **Arnold & Siedsma
Bezuidenhoutseweg 57
2594 AC The Hague (NL)**

(54) **SURFACE TREATMENT AGENT**

(57)    A surface treatment agent capable of forming a film that has excellent corrosion resistance and hydrophilicity with suppressed odor is provided. A surface treatment agent includes: one or more selected from water-soluble inorganic oxides and salts thereof (A); one or more selected from hydrolysates and condensates of organoalkoxysilane (B); water-soluble resin (C); ether compound (D); and water and/or water-miscible solvent; wherein assuming a total mass of the one or more selected from water-soluble inorganic oxides and salts thereof (A), a total mass of the one or more selected from hydrolysates and condensates of organoalkoxysilane (B), a mass of the water-soluble resin (C), and a mass of the ether compound (D) are $M_A$, $M_B$, $M_C$ and $M_D$, respectively, $(M_A + M_B)/(M_A + M_B + M_C + M_D) = 0.01$ to $0.7$ is satisfied.

EP 4 501 471 A1

**Description**

FIELD OF THE INVENTION

The present invention relates to a surface treatment agent, and particularly to a surface treatment agent for metal materials. Furthermore, the present invention relates to a method for surface treating a metal material using the surface treating agent, a method for producing a surface treated metal material, a heat exchanger using a surface treated metal material, a method for surface treating a heat exchanger, a method for producing a surface treated heat exchanger, and a surface treated heat exchanger.

BACKGROUND OF THE INVENTION

Conventionally, heat exchangers used in air conditioners and automobile air conditioners are often made of metal materials, especially aluminum-containing metal materials, due to their superior workability and thermal conductivity. In order to increase heat exchange efficiency, the spacing between the metal materials (generally called fins) in the ventilation parts is designed to be very narrow. When the air conditioner is operated (cooled), moisture in the atmosphere condenses on the fins and condensation occurs, and the higher the hydrophobicity of the fin surface is, the larger the volume of this condensed water becomes, and the more likely it is that clogging occurs between the fins . When clogging occurs, ventilation resistance increases and heat exchange efficiency decreases, making it impossible to obtain the original performance of the heat exchanger. In addition, noise during air blowing may increase due to clogging. In order to solve these problems, methods of imparting hydrophilicity to metal materials have been proposed and implemented.
As methods for imparting hydrophilicity, for example, a hydrophilic treatment agent containing an inorganic substance as a main component (hereinafter referred to as an inorganic hydrophilic treatment agent) (see Patent Literature 1.), and a hydrophilic treatment agent containing resins and organic substances such as polyacrylamide, polyvinyl alcohol, polyvinylpyrrolidone, and polyacrylic acid as a main component (hereinafter referred to as an organic hydrophilic treatment agent) (see Patent Literature 2) have been proposed and implemented.
Metal materials and heat exchangers that have been made hydrophilic using an inorganic hydrophilic treatment agent can maintain high hydrophilicity for a long period of time and have excellent durability. However, there are problems with odor, such as the generation of film odor (dusty odor, hereinafter referred to as dust odor), which are characteristic of inorganic materials. On the other hand, if an organic hydrophilic treatment agent is used, the problem of dust odor will be alleviated. However, organic substances, which are hydrophilic components, are easily washed away, making it difficult to maintain high hydrophilicity over a long period of time, resulting in durability problems. In order to improve these problems, a hydrophilic treatment agent has been proposed that improves the dust odor peculiar to silica by dispersing inorganic silica particles with polyvinyl alcohol (see Patent Literature 3). In addition, a hydrophilic treatment agent composed of an alkali silicate, a specific acrylamide copolymer, and a silane coupling agent has been proposed (see Patent Literature 4).

PRIOR ART

Patent Literature

[Patent Literature 1] Japanese Patent Application Publication No. S59-13078
[Patent Literature 2] Japanese Patent Application Publication No. 2000-328038
[Patent Literature 3] Japanese Patent Application Publication No. 2001-323250
[Patent Literature 4] Japanese Patent Application Publication No. H01-249863

SUMMARY OF THE INVENTION

However, according to the present inventors' study results, although it is described that the films formed by the hydrophilic treatment agent disclosed in Patent Literatures 3 and 4 are excellent in suppressing odor, in a hydrophilic film formed using such hydrophilic treatment agent, due to long-term use of an air conditioner, organic matter in the film is washed away, making it impossible to obtain overall excellent performance in terms of odor control, corrosion resistance, and hydrophilicity. In particular, there is still room for improvement in pitting corrosion resistance (suppression of pitting corrosion).
The present invention was created in view of the above circumstances, and in one embodiment, an object of the present invention is to provide a surface treatment agent capable of forming a film that has excellent corrosion resistance and hydrophilicity with suppressed odor. Moreover, in further embodiments, other objects of the present invention are to provide a method for surface treating a metal material, a method for producing a surface treated metal material, a heat exchanger using a surface treated metal material, a method for surface treating a heat exchanger, a method for producing a surface treated heat exchanger, and a surface treated heat exchanger, respectively.

As a result of intensive studies to solve the above problems, the present inventors have found that, it is advantageous to obtain a surface treatment agent that has excellent corrosion resistance and hydrophilicity and is capable of forming a film with suppressed odor, by mixing one or more selected from the following water-soluble inorganic oxides and salts thereof (A), one or more selected from hydrolysates and condensates of organoalkoxysilane (B), water-soluble resin (C), and ether compound (D) in an appropriate ratio.

The invention is exemplarily specified as follows.

[1] A surface treatment agent, comprising:

one or more selected from water-soluble inorganic oxides and salts thereof (A); one or more selected from hydrolysates and condensates of organoalkoxysilane (B); water-soluble resin (C); ether compound (D); and water and/or water-miscible solvent;

wherein assuming a total mass of the one or more selected from water-soluble inorganic oxides and salts thereof (A), a total mass of the one or more selected from hydrolysates and condensates of organoalkoxysilane (B), a mass of the water-soluble resin (C), and a mass of the ether compound (D) are $M_A$, $M_B$, $M_C$ and $M_D$, respectively, $(M_A + M_B) / (M_A + M_B + M_C + M_D) = 0.01$ to $0.7$ is satisfied.

[2] The surface treatment agent according to [1], wherein the one or more selected from water-soluble inorganic oxides and salts thereof (A) is alkaline and comprises one element (M1) selected from Si, V, Zr, Mo, Ti, and W, and one cationic component (M2) selected from Na, K, Li, and $NH_4$, and wherein a molar ratio (M2) / (M1) of (M2) to (M1) is 0.1 to 8.0.

[3] The surface treatment agent according to [1] or [2], wherein the one or more selected from the water-soluble inorganic oxides and salts thereof (A) is represented by a general formula $Me_2O \cdot nSiO_2$, in which Me is one cationic component selected from Na, K, Li, and $NH_4$, and n is 0.5 to 8.0.

[4] The surface treatment agent according to any one of [1] to [3], wherein assuming the total mass of the one or more selected from the water-soluble inorganic oxides and salts thereof (A) is $M_A$, and the total mass of the one or more selected from hydrolysates and condensates of organoalkoxysilane (B) is $M_B$, $(M_A) / (M_B) = 0.25$ to $4.0$ is satisfied.

[5] The surface treatment agent according to any one of [1] to [4], wherein the one or more selected from the water-soluble inorganic oxides and salts thereof (A) and the one or more selected from hydrolysates and condensates of organoalkoxysilane (B) form a composite, and a median diameter of the composite measured by a dynamic light scattering method is 10 nm or less.

[6] The surface treatment agent according to any one of [1] to [5], wherein the water-soluble resin (C) comprises: one or more selected from a water-soluble resin having one or more functional groups selected from an amide group, a hydroxyl group, and a carboxyl group; or a water-soluble resin having an amide bond in its skeleton.

[7] The surface treatment agent according to any one of [1] to [6], wherein assuming the total mass of the one or more selected from the water-soluble inorganic oxides and salts thereof (A) is $M_A$, the total mass of the one or more selected from hydrolysates and condensates of organoalkoxysilane (B) is $M_B$, the mass of the water-soluble resin (C) is Mc, and the mass of the ether compound (D) is $M_D$, respectively, $M_D / (M_A + M_B + M_C + M_D) = 0.001$ to $0.2$ is satisfied.

[8] A method for surface treating a metal material, comprising bringing the surface treatment agent according to any one of [1] to [7] into contact with the metal material and then drying it.

[9] A method for producing a surface treated metal material, comprising bringing the surface treatment agent according to any one of [1] to [7] into contact with a metal material and then drying it.

[10] A heat exchanger using the surface treated metal material obtained by the method according to [9].

[11] A method for surface treating a heat exchanger, comprising bringing the surface treatment agent according to any one of [1] to [7] into contact with the heat exchanger and then drying it.

[12] A method for producing a surface treated heat exchanger, comprising bringing the surface treatment agent according to any one of [1] to [7] into contact with a heat exchanger and then drying it.

[13] A surface treated heat exchanger obtained by the method according to [12].

According to one embodiment of the invention, it is possible to provide a surface treatment agent capable of forming a film that has excellent corrosion resistance and hydrophilicity with suppressed odor. Therefore, the present invention can contribute to improving the performance of, for example, a heat exchanger that includes a metal material, particularly an air conditioner that includes fins that include a metal material.

DETAILED DESCRIPTION OF THE INVENTION

Hereinafter, embodiments of the present invention including a surface treatment agent and a surface treatment metal material will be described in detail. It should be noted that the present invention can be modified as desired without departing from the spirit of the present invention, and is not limited to the embodiments described below. It should be noted that, in this specification, "to" indicating a numerical range includes the upper limit value and the lower limit value. For example, "X to Y" means equal to or greater than X and equal to or less than Y.

<1. Surface treatment agent>

According to one embodiment of the invention, there is provided a surface treatment agent, comprising: one or more selected from water-soluble inorganic oxides and salts thereof (A); one or more selected from hydrolysates and condensates of organoalkoxysilane (B); water-soluble resin (C); ether compound (D); and water and/or water-miscible solvent.

[1-1. Water-soluble inorganic oxide and salt thereof (A)]

One or more selected from water-soluble inorganic oxides and salts thereof (A) plays a role in imparting hydrophilicity and corrosion resistance to the film, and by mixing it in the film, it is possible to ensure excellent hydrophilicity and corrosion resistance over a long term. As the water-soluble inorganic oxide and salt thereof (A), one type may be used alone, or two or more types may be used in combination. It is preferable that the one or more selected from water-soluble inorganic oxides and salts thereof (A) be alkaline and comprises one element (M1) selected from Si, V, Zr, Mo, Ti, and W, and one cationic component (M2) selected from Na, K, Li, and $NH_4$, and a molar ratio (M2) / (M1) of (M2) to (M1) be 0.1 to 8.0. When (M2) / (M1) is 0.1 or more, the corrosion effect on metals such as aluminum can be prevented from increasing, and the durability of the film can be improved. The lower limit of (M2) / (M1) is more preferably 0.5 or more, and even more preferably 1.0 or more. When (M2) / (M1) is 8.0 or less, the water solubility increases and the liquid stability of the surface treatment agent can be improved. Being water-soluble provides the advantage of improved work efficiency. The upper limit of (M2) / (M1) is more preferably 7.0 or less, and even more preferably 6.0 or less.

In order to obtain excellent hydrophilicity and corrosion resistance, as the one or more selected from the water-soluble inorganic oxides and salts thereof (A), it is preferable to use an alkali silicate represented by the general formula $Me_2O \cdot nSiO_2$ (in which, Me is one cationic component selected from Na, K, Li, and $NH_4$, and n is 0.5 to 8.0). In particular, it is preferable to use an alkali silicate with n = 1.0 to 8.0.

It should be noted that, in this specification, "water-soluble" refers to a substance that has a solubility in water of 0.1% by mass or more at room temperature of 20 °C, and the solubility is preferably 0.5% by mass or more, and it is particularly preferable that the solubility be 1% by mass or more. In addition, in this specification, an oxide refers to a compound having a portion in which a metal atom is directly bonded to an oxygen atom and the oxidation number of the metal atom is (+I) or more.

When the one or more selected from water-soluble inorganic oxides and salts thereof (A) is "alkaline", it means that (A) exhibits "alkalinity" when dissolved in water at 25 °C at a concentration of 0.1% by mass.

Other silicon compounds that can be used as the one or more selected from water-soluble inorganic oxides and salts thereof (A) include, for example, silicon dioxide hydrates and the like.

Examples of titanium compounds that can be used as the one or more selected from water-soluble inorganic oxides and salts thereof (A) include salts of titanium oxide (potassium, ammonium salts, and the like), and the like.

Examples of vanadium compounds that can be used as the one or more selected from water-soluble inorganic oxides and salts thereof (A) include vanadate salts (sodium, potassium, ammonium salts, and the like), metavanadate salts (sodium, potassium, ammonium salts, and the like), and the like. Examples of zirconium compounds that can be used as the one or more selected from water-soluble inorganic oxides and salts thereof (A) include zirconium carbonate and hydrates thereof, as well as zirconium carbonate salts such as ammonium zirconium carbonate and potassium zirconium carbonate, and the like.

Examples of molybdenum compounds that can be used as the one or more selected from water-soluble inorganic oxides and salts thereof (A) include molybdic acid and its salts (sodium, potassium, ammonium salts, and the like), and the like.

Examples of tungsten compounds that can be used as the one or more selected from water-soluble inorganic oxides and salts thereof (A) include salts of tungstic acid (sodium, potassium, ammonium salts, and the like), and the like.

[1-2. Hydrolyzate and condensate of organoalkoxysilane (B)]

When one or more selected from hydrolyzates and condensates of organoalkoxysilane (B) are mixed in the film, the dust odor, which is characteristic of the water-soluble inorganic oxide and salt thereof (A), is reduced. Further, it also plays a role as a binder for the film components, suppresses the leaching of the water-soluble inorganic oxide and salt thereof (A), the water-soluble resin (C), and the ether compound (D), and contributes to long-term development of hydrophilicity, corrosion resistance, and odor suppression. Furthermore, it also contributes to ensuring the stability of the water-soluble inorganic oxide and salt thereof (A) in the surface treatment agent and increasing the stability of the treatment agent.

One or more selected from the hydrolyzates and condensates of organoalkoxysilane (B) is not particularly limited as long as it can be hydrolyzed in water and subjected to dehydration condensation. As the organoalkoxysilane (B), one type may be used alone, or two or more types may be used in combination.

Examples of the organoalkoxysilane include silane coupling agents having an alkoxy group as a hydrolyzable group. Examples of the alkoxy group include, but are not limited to, alkoxy groups having 1 to 4 carbon atoms (in particular,1 or 2 carbon atoms) such as methoxy, ethoxy, propoxy, and butoxy groups. In addition, the silane coupling agent may have an organic functional group, for example, epoxy group (in particular, glycidyl group), amino group, vinyl group, mercapto group, acryloxy group, methacryloxy group, ureido group, isocyanate group, and the like. Among these, one or more selected from organoalkoxysilane having one or more glycidyl groups as an organic functional group are preferable because they are excellent in compositing with the water-soluble inorganic oxide and salt thereof (A). Suitable organoalkoxysilane include, for example, 3-glycidoxypropylmethyldimethoxysilane, 3-glycidoxypropyltrimethoxysilane, 3-glycidoxypropylmethyldiethoxysilane, 3-glycidoxypropylmethyldiethoxysilane, and the like. As long as it conforms to the intention, the organoalkoxysilane may have one or more of an amino group, a vinyl group, a mercapto group, an acryloxy group, a methacryloxy group, a ureido group, and an isocyanate group, in addition to the glycidyl group.

Organoalkoxysilane is hydrolyzed in water to produce silanol and alcohol as hydrolyzates. Silanols and/or alcohols produced by hydrolysis may form hydrogen bonds with each other, and in this specification, such products are also treated as hydrolysates. Furthermore, a condensation reaction product (organosiloxane) having a siloxane bond (Si-O-Si) may be produced by a dehydration condensation reaction of some or all of the silanols produced by hydrolysis. Therefore, the surface treatment agent according to the present invention comprises one or more selected from hydrolysates and condensates of organoalkoxysilane (B).

[1-3. Water-soluble resin (C)]

It is considered that by mixing the water-soluble resin (C) in the film, the composite of the water-soluble inorganic oxide and salt thereof (A) and the organoalkoxysilane (B) can be suppressed from leaching out of the film system in running water or in a corrosive environment, so it increases the film durability and contributes to sustained corrosion resistance, hydrophilicity, and odor suppression. Among the water-soluble resins (C), preferred are a water-soluble resin having one or more functional groups selected from an amide group, a hydroxyl group, and a carboxyl group; or a water-soluble resin having an amide bond in its skeleton. As the water-soluble resins (C), one type may be used alone, or two or more types may be used in combination.

Suitable examples of the water-soluble resin (C) having an amide group include homopolymers and copolymers of acrylamide compounds. Examples of the acrylamide compound include (meth)acrylamide, N-methylol(meth)acrylamide, N-methylenesulfonic acid acrylamide, 2-acrylamido-2-methylpropanesulfonic acid, and the like. Examples of copolymers include copolymers of one or more acrylamide monomers and one or more other comonomers. When producing a copolymer, it is preferable to polymerize at a molar ratio of acrylamide monomer : comonomer = 95:5 or less, more preferable to polymerize at a molar ratio of 90:10 to 10:90, and even more preferable to polymerize at a molar ratio of 85:15 to 15:85. The comonomer used here is selected from anionic, nonionic, and cationic addition polymerizable monomers that can be polymerized with an acrylamide compound, and for example, it can be selected from anionic unsaturated monomer such as (meth)acrylic acid, itaconic acid, maleic acid, vinyl sulfonic acid, styrene sulfonic acid, sulfoethyl acrylate, sulfoethyl methacrylate, acid phosphooxyethyl methacrylate, or salts thereof; nonionic unsaturated monomers such as hydroxyethyl (meth)acrylate, vinylpyrrolidone, acroylmorpholine, polyethylene glycol acrylate, and polyethylene glycol acrylate alkyl phenyl ether; and cationic unsaturated monomers such as aminoethyl (meth)acrylate, N,N-dimethylaminoethyl acrylate, N-hydroxypropylaminoethyl (meth)acrylate, hydroxymethylaminoethyl methacrylate, vinylimidazole, vinylpyridine, N,N-diallylamine, N,N-diallyl-N,N-dimethylammonium chloride, and the like.

From the viewpoint of increasing the durability of the film, the weight average molecular weight of the water-soluble resin (C) having an amide group, in particular, the homopolymer and copolymer of an acrylamide compound, is preferably 5,000 to 2,000,000, and more preferably 5,000 to 1,500,000.

In terms of maintaining hydrophilicity and odor over a long period of time, the water-soluble resin (C) having a hydroxyl group is preferably a water-soluble resin with a high density of hydroxyl groups, and more preferably is a polyvinyl alcohol or a derivative thereof. Polyvinyl alcohol or a derivative thereof represents a polymer containing a repeating unit of (-CH$_2$CH(OH)-), and can be produced according to a known production method, and is not particularly limited. Examples thereof include partially saponified and completely saponified polyvinyl esters obtained by radical polymerization of vinyl esters as monomers, partially saponified and completely saponified copolymers of vinyl esters and other comonomers, as well as modified products of polyvinyl alcohol. Examples of vinyl esters include vinyl formate, vinyl acetate, vinyl propionate, vinyl butyrate, vinyl isobutyrate, vinyl pivalate, vinyl versatate, and vinyl caproate. Among these, vinyl acetate is preferred.

There are no particular limitations on the comonomer copolymerized with vinyl ester, but for example, $\alpha$-olefins such as ethylene and propylene; hydroxy group-containing $\alpha$-olefins such as 3-buten-1-ol, 4-penten-1-ol, 5-hexene-1,2-diol, and derivatives such as acylated products thereof; unsaturated acids such as acrylic acid, methacrylic acid, itaconic acid, maleic acid, salts thereof, mono- or dialkyl esters thereof; nitriles such as acrylonitrile; amides such as methacrylamide and diacetone acrylamide; olefin sulfonic acids or salts thereof such as ethylene sulfonic acid, allyl sulfonic acid, methalylsulfonic acid; allyl compounds such as ethylene oxide monoallyl ether; and the like may be copolymerized. These comonomers may be used alone or in combination of two or more. When producing a copolymer, it is preferable to polymerize at a molar ratio of vinyl ester monomer : comonomer = 95:5 or less, more preferable to polymerize at a molar ratio of 90: 10 to 10:90, and even more preferable to polymerize at a molar ratio of 85:15 to 15:85.

Among polyvinyl alcohol or its derivatives, in terms of maintaining hydrophilicity and odor properties for a long time, it is preferable that the degree of saponification be 90 mol% or more, more preferably 95 mol% or more, and there is no particular restriction to the upper limit, so it may be 100 mol%. The degree of saponification of polyvinyl alcohol or its derivative is measured in accordance with JIS K6726:1994.

In terms of improving the durability of the film, the weight average molecular weight of the water-soluble resin (C) having a hydroxyl group, typically polyvinyl alcohol or its derivative, is preferably 5,000 to 200,000, and more preferably 5,000 to 100,000. In particular, when it is one or more selected from polyvinyl alcohol or derivatives thereof and has a degree of saponification of 90 mol% or more, it is more preferable that the weight average molecular weight be 10,000 to 50,000.

A preferable example of the water-soluble resin (C) having a carboxyl group is polyacrylic acid or a derivative thereof.

Polyacrylic acid or a derivative thereof represents a polymer containing a structure derived from (meth)acrylic acid (salt), and can be produced according to a known producing method, and is not particularly limited. Examples include polymers obtained by radical polymerization of (meth)acrylic acid (salts), copolymers thereof, or salts thereof. The structure derived from (meth)acrylic acid (salt) is a structure formed by radical polymerization of (meth)acrylic acid (salt), and has a structure represented by -CH$_2$CR(COOM)-. In this structure, R represents a hydrogen atom or a methyl group, and M represents a hydrogen atom, a metal atom, an ammonium salt, or an organic amine salt. Examples of the metal atoms include alkali metal atoms such as Li, Na, and K, and alkaline earth metal atoms such as Ca and Mg. The above (meth)acrylic acid (salt) refers to acrylic acid, acrylate, methacrylic acid, and methacrylate, and among these, acrylic acid and acrylate are preferred. As these (meth)acrylic acids (salts), one type may be used alone, or two or more types may be used in combination. Examples of the salt of the (meth)acrylic acid (salt) include metal salts, ammonium salts, and organic amine salts. When polyacrylic acid or its derivative is a copolymer, it is preferable to polymerize at a molar ratio of (meth) acrylic acid (salt) : comonomer = 95:5 or less, more preferable to polymerize at a molar ratio of 90:10 to 10:90, and even more preferable to polymerize at a molar ratio of 85:15 to 15:85.

From the viewpoint of increasing the durability of the film, the weight average molecular weight of the water-soluble resin (C) having a carboxyl group, in particular, the homopolymer and copolymer of polyacrylic acid or its derivatives, is preferably 5,000 to 2,000,000, and more preferably 10,000 to 1,500,000.

Examples of the water-soluble resin (C) having an amide bond in its skeleton include water-soluble polyamide. Examples of water-soluble polyamides include basic polyamides obtained from polyalkylene polyamines and aliphatic dicarboxylic acids, such as adipic acid; and epoxy-modified polyamides produced by reacting the basic polyamides with epichlorohydrin. Further, examples include cationic polyamides containing amino groups and nonionic polyamides containing ethylene oxide.

The weight average molecular weight of the water-soluble resin (C) in the present invention is measured by GPC method. The weight average molecular weight in Examples was measured under the following conditions.

<Measurement conditions by GPC>

Measuring using a high-speed GPC device (HLC-8320GPC: manufactured by Tosoh Corporation), the weight average molecular weight was determined using a combination of an SEC column and a guard column. The measurement was conducted under the following conditions.

SEC column: TSKgel Super AWM-H (produced by Tosoh Corporation)
Guard column: TSK guard column Super AW-H (produced by Tosoh Corporation)
Detector: RI (HLC-8320GPC built-in detector)
Standard sample: polystyrene
Sample injection amount: 30 $\mu$L of 0.06% DMF solution
Flow rate: 0.5 mL/min
Eluent: DMF/100mM LiBr /60mM $H_3PO_4$

[1-4. Ether compound (D)]

The ether compound (D) refers to a compound having an ether bond represented by -CO-C- in the molecule. The ether compound (D) plays a role in increasing hydrophilicity. Further, although the present invention is not intended to be limited by theory, it is believed that the ether compound (D) can improve the durability of the film by suppressing the leaching of the water-soluble resin (C). Examples of the ether compound (D) include, but are not limited to, polyalkylene glycol, polyalkylene glycol alkyl ether, polyoxyalkylene alkyl ether, polyoxyalkylene phenyl ether, ether ester compounds, glycidyl ether compounds, and carbohydrates with pyranose structure or furanose structure, and the like. As the ether compound (D), one type may be used alone, or two or more types may be used in combination.

Examples of polyalkylene glycols include polyethylene glycol and polypropylene glycol. Examples of the polyalkylene glycol alkyl ether include polyethylene glycol (mono)methyl ether, poly(ethylene, propylene) glycol (mono)methyl ether, polyethylene glycol (mono)ethyl ether, and the like. Examples of the polyoxyalkylene alkyl ether include polyoxyethylene alkyl (in particular, alkyl having 12 to 15 carbon atoms) ether. Examples of the polyoxyalkylene phenyl ether include polyoxyethylene phenyl ether. Examples of the ether ester compound include polyoxyethylene dodecyl ether sodium sulfate, polyoxyethylene sorbitol ether fatty acid ester, and the like. These polyoxyalkylene alkyl ethers may be ether compounds having a plurality of alkylene structures having different numbers of carbon atoms.

Examples of the glycidyl ether compound include sorbitol polyglycidyl ether, glycerol polyglycidyl ether, diglycerol polyglycidyl ether, polyglycerol polyglycidyl ether, trimethylolpropane polyglycidyl ether, ethylene glycol diglycidyl ether, polyethylene glycol diglycidyl ether, propylene glycol diglycidyl ether, polypropylene glycol diglycidyl ether, phenolic glycidyl ether containing ethylene oxide, lauryl alcohol glycidyl ether containing ethylene oxide, bisphenol A epoxy resin, bisphenol F epoxy resin, and bisphenol AD epoxy resin, and the like. Examples of the carbohydrates with pyranose structure or furanose structure include polysaccharides such as starch, glycogen, cellulose, chitin, and dextran, and derivatives thereof. Cellulose derivatives are examples of polysaccharide derivatives, and examples thereof include alkylcellulose such as methylcellulose (MC); hydroxyalkyl cellulose such as hydroxypropyl cellulose (HPC), hydroxyethyl cellulose (HEC); hydroxyalkylalkylcellulose such as hydroxypropyl methylcellulose (HPMC), hydroxyethylmethylcellulose (HEMC), hydroxyethyl ethylcellulose (HEEC); and carboxymethyl cellulose sodium (CMC-Na).

[1-5. Other ingredients (E)]

The surface treatment agent may contain various additives such as an acid catalyst, a crosslinking agent, an antibacterial agent, a lubricant, a surfactant, a pigment, a dye, and an inhibitor for imparting corrosion resistance, as necessary. Further, the surface treatment agent preferably contains water, a water-miscible solvent, or a mixed solvent of water and a water-miscible solvent in order to dissolve necessary components. From the viewpoint of ease of handling the surface treatment agent, it is preferable to use deionized water as the water. The content of water is preferably 80 to 99% by mass, more preferably 85 to 95% by mass, with respect to the total amount of the surface treatment agent. When using a mixed solvent of water and a water-miscible solvent, the proportion of water is preferably 60% by mass or more with respect to the total mass of the mixed solvent, for example. The water-miscible solvent is not particularly limited as long as it does not undergo phase separation after mixing with water, and examples thereof include alcohols such as methanol and ethanol.

The type of acid catalyst (ring opening of epoxy group, hydrolysis of silicon-bonded alkoxy group) is not particularly limited, and examples thereof include organic acid such as (1) carboxylic acids (monocarboxylic acids, dicarboxylic acids, acids, polycarboxylic acids such as tricarboxylic acid), (2) nitrilotrismethylenephosphonic acid, nitrilotrispropylenephosphonic acid, nitrilodiethylmethylenephosphonic acid, methane-1-hydroxy-1,1-diphosphonic acid, ethane-1-hydroxy-l,l-diphosphonic acid, propane-1 -phosphonic acids such as hydroxy-1,1-diphosphonic acid, (3) sulfonic acids such as methanesulfonic acid and benzenesulfonic acid; and inorganic acids (4) such as phosphoric acid; and the like. It should be noted that the acid catalyst remains in the film even after the film is formed. Considering this, organic acids are preferred, and carboxylic acids are more preferred, since the resulting film has excellent water resistance. These may be used alone or in combination of two or more.

[1-6. Formulation ratio (A) to (D)]

It is required that, in the surface treatment agent, when assuming a total mass of the one or more selected from water-soluble inorganic oxides and salts thereof (A), a total mass of the one or more selected from hydrolysates and condensates of organoalkoxysilane (B), a mass of the water-soluble resin (C), and a mass of the ether compound (D) are $M_A$, $M_B$, $M_C$ and $M_D$, respectively, $(M_A + M_B) / (M_A + M_B + M_C + M_D) = 0.01$ to $0.7$ is satisfied. Further, it is preferable that $(M_A + M_B) / (M_A + M_B + M_C + M_D) = 0.05$ to $0.5$ be satisfied, and more preferable that $(M_A + M_B) / (M_A + M_B + M_C + M_D) = 0.1$ to $0.4$ be satisfied. If $(M_A + M_B) / (M_A + M_B + M_C + M_D)$ exceeds $0.7$, the composite of the one or more selected from water-soluble inorganic oxides and salts thereof (A) and the one or more selected from hydrolysates and condensates of organoalkoxysilane (B), which will be described later, cannot be sufficiently fixed in the film and may be washed away, resulting in insufficient hydrophilicity and corrosion resistance. In addition, if $(M_A + M_B) / (M_A + M_B + M_C + M_D)$ is less than $0.01$, the active ingredient will be insufficient, resulting in insufficient hydrophilicity and corrosion resistance.

Furthermore, in the surface treatment agent, when assuming the total mass of the one or more selected from the water-soluble inorganic oxides and salts thereof (A) is $M_A$, and the total mass of the one or more selected from hydrolysates and condensates of organoalkoxysilane (B) is $M_B$, it is preferable that $(M_A) / (M_B) = 0.25$ to $4.0$ be satisfied, and more preferable that $(M_A) / (M_B) = 0.5$ to $2.0$ be satisfied. When $(MA)/(MB)$ is $4.0$ or less, it becomes easier to coat and retain the one or more selected from water-soluble inorganic oxides and salts thereof (A) by the one or more selected from hydrolysates and condensates of organoalkoxysilane (B), so that the effect of suppressing odor is improved, and both hydrophilicity and corrosion resistance are improved. In addition, when $(M_A) / (M_B)$ is $0.25$ or more, it is possible to suppress a decrease in operability due to decrease of the stability of the one or more selected from water-soluble inorganic oxides and salts thereof (A) in the surface treatment agent, or precipitation or aggregation generated due to long-term storage.

Furthermore, in the surface treatment agent, when assuming the total mass of the one or more selected from the water-soluble inorganic oxides and salts thereof (A) is $M_A$, the total mass of the one or more selected from hydrolysates and condensates of organoalkoxysilane (B) is $M_B$, the mass of the water-soluble resin (C) is $M_C$, and the mass of the ether compound (D) is $M_D$, respectively, it is preferable that $M_D / (M_A + M_B + M_C + M_D) = 0.001$ to $0.2$ be satisfied, more preferable that $M_D / (M_A + M_B + M_C + M_D) = 0.01$ to $0.2$ be satisfied, and even more preferable that $M_D / (M_A + M_B + M_C + M_D) = 0.03$ to $0.2$ be satisfied. When $M_D / (M_A + M_B + M_C + M_D)$ is $0.2$ or less, it is possible to suppress a decrease in water resistance of the film, and in addition to improving corrosion resistance, hydrophilicity during durability is also likely to be improved. When $M_D / (M_A + M_B + M_C + M_D)$ is $0.001$ or more, improvement in hydrophilicity can be expected.

As will be described later, the one or more selected from the water-soluble inorganic oxides and salts thereof (A) and the one or more selected from hydrolysates and condensates of organoalkoxysilane (B) can react to form a composite, but it is difficult to quantitatively analyze and identify the chemical structure of the composite. Therefore, $M_A$ and $M_B$ are determined assuming that no composite is formed in the surface treatment agent. Furthermore, since it is difficult to quantitatively analyze and identify hydrolysates and condensates, $M_B$ is determined based on the mass of organoalkoxysilane (B), which is a raw material for these. In addition, $M_A$, $M_C$, and $M_D$ are based on the mass when the one or more selected from water-soluble inorganic oxides and salts thereof (A), the water-soluble resin (C), and the ether compound (D) are formulated, respectively.

[1-7. Composite]

It is preferable that the one or more selected from the water-soluble inorganic oxides and salts thereof (A) and the one or more selected from hydrolysates and condensates of organoalkoxysilane (B) react to form a composite in the surface treatment agent. The chemical structure of composite is not necessarily clear, but it is presumed that silanol (-Si-OH) produced by hydrolysis of organoalkoxysilane has a structure in which it is bonded to the metal element of the water-soluble inorganic oxide and salt thereof. In this specification, when a spectrum is measured by multinuclear NMR, it is determined that a composite exists if a peak of (Si-O-Me; in which, Me constitutes a water-soluble inorganic oxide and salt thereof (A), and is a metal atom or cation component directly bonded to an oxygen atom, such as Si, V, Zr, Mo, Ti, W, Na, K, Li, or $NH_4$) is observed, and it is determined that a composite does not exist if the above peak is not observed.

In the Examples, spectrum measurements by multinuclear NMR were performed under the following conditions.

- Measuring device: JNM-ECX400 manufactured by JEOL Ltd.
- Probe: NM-40T10AT manufactured by JEOL Ltd.

- Measurement solvent: heavy water

The particle size of the composite of the one or more selected from the water-soluble inorganic oxides and salts thereof (A) and the one or more selected from hydrolysates and condensates of organoalkoxysilane (B) contributes to the stability and film-forming properties of the surface treatment agent. The smaller the particle size of the composite is, the less likely precipitation will occur in the treatment agent during long-term storage, and the better the adhesion of the film formed by using the surface treatment agent and the film-forming properties of the film itself. From the above point of view, the median diameter of the composite is preferably 10 nm or less. The "median diameter" in the present invention refers to the cumulative 50% diameter based on the scattered light intensity when the particle size distribution is measured by a dynamic light scattering method, regardless of whether they are primary particles or secondary particles. Examples of measuring instruments using the dynamic light scattering method include UPA-EX150 manufactured by Nikkiso Co., Ltd., and the like. The dynamic light scattering method uses the fact that the speed of movement (Brownian motion) differs depending on the size of particles in a solution, and the particle size distribution can be obtained by irradiating a solution with laser light, observing the scattered light with a photon detector, and performing frequency analysis. In the examples, the particle size distribution of the composite was measured under the following conditions. According to the measurement procedure, it is possible to obtain a particle size distribution that takes into account particles other than the above-mentioned composite, but it is difficult to separate and measure these. Therefore, in this specification, even if particles other than the composite are present, it is regarded as the particle size distribution of the composite.

(Particle size measurement conditions)

Measuring device: UPA-EX150 manufactured by Nikkiso Co., Ltd.
Light source: semiconductor laser 780 nm, 3 mW
Light source probe: Internal probe method

Preparation of measurement sample: after diluting the composite of the one or more selected from the water-soluble inorganic oxides and salts thereof (A) and the one or more selected from hydrolysates and condensates of organoalkoxysilane (B) with deionized water such that the solid content concentration was approximately 0.01% by mass, it was thoroughly stirred and dispersed. It should be noted that the solid content concentration here refers to a value measured by a normal pressure heating drying method (sample weight: 1.0 g, drying temperature 110 °C × 2 hours drying) in accordance with JIS K6828-1: 2003.

Measurement time: 180 seconds
Circulation: None
Transparency: transparent
Shape: non-spherical
Refractive index: 1.81 (device default setting)
Solvent: water
Solvent refractive index: 1.333

[1-8. pH of surface treatment agent]

The pH (at 25 °C) of the surface treatment agent is preferably 7.0 or higher, more preferably 7.0 to 11.0, and even more preferably 7.0 to 10.0.

[1-9. Producing method]

The surface treatment agent can be prepared, for example, by mixing the above-mentioned components in a desired ratio, adding a required amount of water to the mixture, and stirring the mixture.
However, regarding the one or more selected from hydrolysates and condensates of organoalkoxysilane (B), it is possible to generate one or more selected from hydrolyzates and condensates of organoalkoxysilane (B) in advance in water and then mix them with other components, or alternatively, organoalkoxysilane (B) may be mixed with other components, and one or more selected from hydrolysates and condensates may be generated during mixing. In either case, in order to efficiently proceed with the hydrolysis of organoalkoxysilane (B), it is preferable to stir while heating the mixture to 30 to 80 °C. In order to promote hydrolysis of organoalkoxysilane (B), an acid catalyst may be added as necessary.

Furthermore, in order to promote the formation of a composite, the one or more selected from the water-soluble inorganic oxides and salts thereof (A) and the organoalkoxysilane (B) may be pretreated by heating, stirring, and the like in water in a container before mixing them with other components. The heating is preferably from 30 to 80 °C in order to efficiently proceed with the hydrolysis of organoalkoxysilane (B). Alternatively, the one or more selected from water-soluble inorganic oxides and salts thereof (A) and the one or more selected from hydrolysates and condensates of organoalkoxysilane (B) may be pretreated by placing them in a container and stirring them in water before mixing them with other components. During the pretreatment, it is preferable to accelerate the formation of a composite by heating to 30 to 80 °C. In these pretreatments, an acid catalyst may be added as necessary to promote hydrolysis of the organoalkoxysilane (B).

<2. Surface treated metal materials and surface treated heat exchangers>

According to one embodiment of the present invention, there are provided a method for surface treating a metal material, and a method for producing a surface treated metal material, the methods comprising a step of bringing the surface treatment agent described above into contact on or above the surface of a metal material, and a step of drying the surface treatment agent after the contacting step. Further, by this producing method, a metal material having a surface treatment film can be obtained. The metal material produced in this manner and having a surface treated film on its surface is useful for forming a fin material. Moreover, this fin material is useful as a component of a heat exchanger. Therefore, according to one embodiment of the present invention, there is provided a heat exchanger using the surface treated metal material obtained by the above producing method.

According to another embodiment of the present invention, there are provided a method for surface treating a heat exchanger and a method of producing a surface treated heat exchanger, the methods comprising a step of bringing the surface treatment agent into contact on or above the surface of a heat exchanger, and a step of drying the surface treatment agent after the contacting step. Further, by this producing method, a surface-treated heat exchanger having a surface treated film can be obtained. The heat exchanger thus obtained is provided with a surface treatment film having excellent corrosion resistance, and is therefore useful in that it can prolong the life of the machine and make effective use of resources. In addition, the surface treatment film formed on the heat exchanger has excellent hydrophilic properties, so water droplets do not accumulate between the fins. This is useful in that it is possible to suppress a decrease in heat exchange efficiency and, in turn, to improve energy efficiency.

In this surface treatment film, the ratio of the one or more selected from water-soluble inorganic oxides and salts thereof (A), the one or more selected from hydrolysates and condensates of organoalkoxysilane (B), the water-soluble resin (C), and the ether compound (D), is substantially the same as the ratio of the one or more selected from water-soluble inorganic oxides and salts thereof (A), the one or more selected from hydrolysates and condensates of organoalkoxysilane (B), the water-soluble resin (C), and the ether compound (D) in the surface treatment agent.

[2-1. Metal materials and heat exchanger materials]

There are no particular restrictions on the metal materials and heat exchanger materials to which the above surface treatment agents can be applied, and examples thereof include aluminum, steel, stainless steel, titanium, and alloys thereof. The above-mentioned surface treatment agent can be particularly suitably applied to aluminum-containing metal materials. The material constituting the aluminum-containing metal material may be pure aluminum or may be an aluminum alloy.

[2-2. Washing step]

It is preferred that untreated metal materials and heat exchangers be cleaned in advance with an acidic or alkaline cleaning agent. An example of the acidic cleaning agent used is an acidic aqueous solution containing at least one of nitric acid, sulfuric acid, and hydrofluoric acid. Examples of alkaline cleaning agents include aqueous alkaline solutions containing at least one of sodium hydroxide, sodium silicate, and sodium phosphate. A surfactant may be added to the alkaline aqueous solution to improve cleaning performance. Examples of methods for cleaning metal materials and heat exchangers include a dipping method and a spray method.

[2-3. Rust prevention treatment]

A rust prevention treatment may be performed after the cleaning step. Rust prevention treatment methods include chemical conversion treatment and base rust prevention treatment using a resin primer. Among these, examples of the chemical conversion treatment agent used in the chemical conversion treatment include conventionally known chromic acid chromate treatment agents, phosphoric acid chromate treatment agents, and non-chromium treatment agents. Examples of the resin primer include conventionally known water-soluble or water-dispersible aqueous resins. Examples of the rust prevention treatment method include a dipping method and a spray method.

[2-4. Contacting step]

The method of bringing the surface treatment agent into contact on or above the surface of the metal material and the heat exchanger is not particularly limited, and examples thereof include a dipping method, a spray method, a roll coating method, and a brush coating method. The temperature of the surface treatment agent at this time can be about 10 to 50 °C. The contact time can be about 3 seconds to 5 minutes.

[2-5. Drying step]

The method for drying the surface treatment agent is not particularly limited as long as the water in the surface treatment agent evaporates. Illustrative examples include drying methods using a known drying equipment such as an oven, a batch type drying furnace, a continuous hot winds circulation drying furnace, a conveyor type hot wind drying furnace, an electromagnetic induction heating furnace with IH heaters, and the like. The drying temperature can be from 100 to 250 °C, preferably from 120 to 180 °C. The drying time can be from 10 seconds to 120 minutes, preferably from 1 to 60 minutes.

[2-6. Mass of surface treatment film]

The mass of the metal material having a surface treatment film and the surface treatment film in the heat exchanger is not particularly limited as long as it can exhibit the effects of the present invention, but is preferably in the range of 0.01 to 5.0 g/m$^2$, more preferably in the range of 0.05 to 3.5 g/m$^2$, and particularly preferably in the range of 0.1 to 2.0 g/m$^2$. If the amount of the surface treatment film is 0.1 g/m$^2$ or more, the coating of the metal material and the heat exchanger will be sufficient, and a film with excellent hydrophilicity and corrosion resistance and suppressed odor, which is the objective of the present invention, can be obtained. In addition, it is economical if the amount of surface treatment film is 3.0 g/m$^2$ or less.

[2-7. Post-processing steps]

A post-treatment step may be performed after forming the surface treatment film. The post-treatment steps include a lubricating oil contacting step or a lubricating film forming step. More specifically, examples include bringing a lubricating oil into contact with a surface treatment film on the surface of a metal material and a heat exchanger, or bringing a lubricant into contact with the surface to form a lubricating film. In this way, it is possible to obtain a metal material and a heat exchanger having a multilayer film in which a lubricating oil is brought into contact with the surface treatment film or a lubricating coating is formed on the surface treatment film. In addition, the method of contacting the lubricating oil or lubricant is not particularly limited, and examples thereof include a roll coating method, a spray method, and a dipping method.

As the lubricating oil, known lubricating oils used during forming process can be used. Furthermore, as the lubricant for forming the lubricating film, known lubricants such as water-soluble polyether, polyethylene glycol, polyoxyethylene alkyl ether, and polyoxyethylene hydrogenated castor oil ether can be used.

EXAMPLES

Hereinafter, the present invention will be explained in more detail based on Examples, but the present invention is not limited by these Examples.

<Synthesis of composite of one or more selected from water-soluble inorganic oxides and salts thereof (A) and one or more selected from hydrolysates and condensates of organoalkoxysilane (B)>

[Synthesis Examples X1 to X19]

First, a synthesis method will be described using Synthesis Example X1 as an example. To a glass container containing a stirring bar, 49 g of lithium silicate, 49 g of 3-glycidoxypropyltrimethoxysilane, 900 g of deionized water, and 2 g of acetic acid were sequentially added. The ring-opening reaction and hydrolysis of the methoxy group started at 60°C. Two hours after the start of the reaction, the bath temperature was cooled to below 40 °C, and the water lost by evaporation was compensated with deionized water. An aqueous dispersion containing a composite of lithium silicate (A1) and one or more selected from hydrolysates and condensates of 3-glycidoxypropyltrimethoxysilane (B1) and having a solid content of 10% by mass was obtained. The concentration of "solid content" herein refers to a value measured by a normal pressure heating drying method (sample weight: 1.0 g, drying temperature 110 °C × 2 hours drying) in accordance with JIS K6828-1: 2003.

Regarding the composites related to Synthesis Examples X2 to X19, they were synthesized in the same manner as in the synthesis example of X1, except that the inorganic compound (A), the organoalkoxysilane (B) shown in Table 1, and the other components (E) shown in Table 3 were used in the formulation amounts shown in Table 1.

Details of the inorganic compound (A) used in Synthesis Examples X1 to X19 are shown in Table 2. The pH values when the inorganic compound (A) was dissolved in water at 25 °C at a concentration of 0.1% by mass are shown in Table 2. It should be noted that the colloidal silica A6 was water-insoluble.

The median diameter of the composites according to Synthesis Examples X1 to X19 obtained by the above procedure was measured by the above-mentioned dynamic light scattering method. The measurement results are shown in Table 1. Due to analysis accuracy, values less than 10 nm are marked as "<10". The presence of the composite was confirmed by the above-mentioned multinuclear NMR spectrum measurement.

Table 1

| Designation | Inorganic compound (A) | | Organoalkoxysilane (B) | | Other ingredients (E) | | Mass ratio (A)/(B) | Median diameter of composite nm |
| --- | --- | --- | --- | --- | --- | --- | --- | --- |
| | Type | Formulation amount (g) | Type | Formulation amount (g) | Type | Formulation amount (g) | | |
| Synthesis Example X1 | Lithium silicate (n=7.5) | 49.00 | 3-glycidoxypropyltrimethoxysilane (B1) | 49.00 | Acetic acid | 2.00 | 1.00 | <10 |
| Synthesis Example X2 | Lithium silicate (n=7.5) | 49.00 | 3-glycidoxypropyltrimethoxysilane (B1) | 49.00 | Tartaric acid | 2.00 | 1.00 | <10 |
| Synthesis Example X3 | Lithium silicate (n=7.5) | 100.00 | - | 0.00 | - | - | - | - |
| Synthesis Example X4 | Lithium silicate (n=7.5) | 83.34 | 3-glycidoxypropyltrimethoxysilane (B1) | 16.66 | - | - | 5.00 | <10 |
| Synthesis Example X5 | Lithium silicate (n=7.5) | 80.00 | 3-glycidoxypropyltrimethoxysilane (B1) | 20.00 | - | - | 4.00 | <10 |
| Synthesis Example X6 | Lithium silicate (n=7.5) | 66.66 | 3-glycidoxypropyltrimethoxysilane (B1) | 33.34 | - | - | 2.00 | <10 |
| Synthesis Example X7 | Lithium silicate (n=7.5) | 50.00 | 3-glycidoxypropyltrimethoxysilane (B1) | 50.00 | - | - | 1.00 | <10 |
| Synthesis Example X8 | Lithium silicate (n=7.5) | 33.40 | 3-glycidoxypropyltrimethoxysilane (B1) | 66.60 | - | - | 0.50 | <10 |
| Synthesis Example X9 | Lithium silicate (n=7.5) | 20.00 | 3-glycidoxypropyltrimethoxysilane (B1) | 80.00 | - | - | 0.25 | <10 |
| Synthesis Example X10 | Lithium silicate (n=7.5) | 10.00 | 3-glycidoxypropyltrimethoxysilane (B1) | 90.00 | - | - | 0.11 | 12 |
| Synthesis Example X11 | - | 0.00 | 3-glycidoxypropyltrimethoxysilane (B1) | 100.00 | - | - | 0.00 | - |
| Synthesis Example X12 | Sodium metavanadate | 20.00 | 3-glycidoxypropyltrimethoxysilane (B1) | 80.00 | - | - | 0.25 | <10 |
| Synthesis Example X13 | Sodium metavanadate | 50.00 | 3-glycidoxypropyltrimethoxysilane (B1) | 50.00 | - | - | 1.00 | <10 |

| Designation | Inorganic compound (A) | | Organoalkoxysilane (B) | | Other ingredients (E) | | Mass ratio | Median diameter of composite |
|---|---|---|---|---|---|---|---|---|
| | Type | Formulation amount (g) | Type | Formulation amount (g) | Type | Formulation amount (g) | (A) / (B) | nm |
| Synthesis Example X14 | Sodium metava-nadate | 80.00 | 3-glycidoxypropyltri-methoxysilane (B1) | 20.00 | - | - | 4.00 | <10 |
| Synthesis Example X15 | Sodium silicate (n=2.5) | 50.00 | 3-glycidoxypropyltrimethoxysilane (B1) | 50.00 | - | - | 1.00 | <10 |
| Synthesis Example X16 | Potassium silicate (n=3.0) | 50.00 | 3-glycidoxypropyltrimethoxysilane (B1) | 50.00 | - | - | 1.00 | <10 |
| Synthesis Example X17 | Sodium tung-state | 50.00 | 3-glycidoxypropyltri-methoxysilane (B1) | 50.00 | - | - | 1.00 | <10 |
| Synthesis Example X18 | Colloidal silica | 50.00 | 3-glycidoxypropyltrimethoxysilane (B1) | 50.00 | - | - | 1.00 | 85 |
| Synthesis Example X19 | Potassium silicate (n=2.0) | 77.50 | $\gamma$-methacryloxypropyl-trimethoxysilane (B2) | 18.75 | Ethyl acetoacetate titanium diisopropylate | 3.75 | 4.13 | 10 |

EP 4 501 471 A1

Table 2

| inorganic compound (A) | Name of substance | General structural formula | Metal-alkali element molar ratio (M2)/(M1) | pH |
|---|---|---|---|---|
| A1 | Lithium silicate (n=7.5) | $Li_2O \cdot 7.5SiO_2$ | 3.8 | 10.4 |
| A2 | Sodium silicate (n=2.5) | $Na_2O \cdot 2.5SiO_2$ | 1.3 | 10.4 |
| A3 | Potassium silicate (n=3.0) | $K_2O \cdot 3.0SiO_2$ | 1.5 | 10.4 |
| A4 | Sodium metavanadate | $NaVO_3$ | 1.0 | 7.1 |
| A5 | Sodium tungstate | $Na_2WO_4$ | 0.5 | 7.1 |
| A6 | Colloidal silica (particle size 80nm) | - | - | 10.4 |
| A7 | Potassium silicate (n=2.0) | $K_2O \cdot 2.0SiO_2$ | 1.0 | 10.4 |

Table 3

| Other ingredients (E) | Name of substance |
|---|---|
| E1 | Acetic acid |
| E2 | Tartaric acid |
| E3 | Ethyl acetoacetate titanium diisopropylate |

<Synthesis of water-soluble resin (C)>

[Synthesis Example C1]

To a 2L autoclave reactor equipped with reflux condenser, a raw material inlet, a thermometer, a pressurized gas inlet and a stirring blade, 50 g of vinyl acetate and 80 g of methanol were charged while introducing nitrogen gas as a pressurized gas, and 30 mL of a 2% by mass methanol solution of 2,2'-azobis(2,4-dimethylvaleronitrile) was added little by little as an initiator. After the entire amount of methanol solution was added, the mixture was heated to 60 °C to start the polymerization reaction. Five hours after the start of the reaction, unreacted vinyl acetate was removed under reduced pressure to prepare a vinyl acetate resin methanol solution. A 10% by mass aqueous sodium hydroxide solution was added to the obtained vinyl acetate resin methanol solution such that the molar ratio of sodium hydroxide to vinyl acetate (50 g) used as the raw material was 0.01, and saponification was performed at 50 °C for 1 hour. Next, methanol was distilled off under reduced pressure, water was removed by centrifugation, and polyvinyl alcohol (resin C1) powder with a degree of saponification of 98 mol% was obtained after drying. The weight average molecular weight was measured by gel permeation chromatography (GPC) under the conditions described above and found to be 13,000. When the ethylene modification rate (content of ethylene structural units in the water-soluble resin (C)) was measured by proton NMR, it was found to be 0 mol%.

The specific procedure for measuring the ethylene modification rate was as follows. Resin (A) was added to deionized water and warmed to 85 to 95 °C to dissolve. This was diluted with dimethyl sulfoxide (DMSO)-d6 so that the concentration of the resin (A) was 1.0% by mass, and it was used as an NMR sample. Proton NMR measurement was performed using a nuclear magnetic resonance analyzer (example: JNM-EX400 manufactured by JEOL Ltd.). Measurements were performed under the following conditions.

Measurement nuclide: 1H

Observed temperature: 25.1 °C

Each peak in the obtained spectrum was assigned as follows.

- 1.0 to 2.0 ppm: methylene protons of ethylene structural units and methylene protons of hydroxyethylene structural units
- 3.7 to 4.1 ppm: methine proton of hydroxyethylene structural unit adjacent to at least one ethylene structural unit
- 4.1 to 4.5 ppm: methine proton of hydroxyethylene structural unit not adjacent to ethylene structural unit

According to the above assignment, assuming the integral value of 1.0 to 2.0 ppm is x, the integral value of 3.7 to 4.1 ppm is y, and the integral value of 4.1 to 4.5 ppm is z, the ethylene modification rate can be calculated using the following formula.

$$\text{Ethylene modification rate} = \{(x-2y-2z) / 4\} / \{y+z+(x-2y-2z) / 4\}$$

[Synthesis examples C2, C3]

Water-soluble resin (C) was synthesized in exactly the same manner as in Synthesis Example 1 except for the conditions shown in Table 4. The weight average molecular weight, the ethylene modification rate, and the degree of saponification of the water-soluble resin (C) are shown in Table 5.

In addition, the obtained water-soluble resins (C) are referred to as C1, C2, C3, and so on, in correspondence with the numbers of the synthesis Examples. When 10 g of each of the obtained powders of resins C1 to C3 was taken, placed in 90 g of hot water at 85 to 95 °C, and heated and stirred for 2 to 3 hours, it was completely dissolved.

Table 4

| Synthesis Example | Water-soluble resin (C) | Vinyl acetate | Methanol | Initiator | Pressurized gas | Pressurized gas pressure |
|---|---|---|---|---|---|---|
| | | g | g | mL | | MPa |
| Synthesis Example 1 | C1 | 50 | 80 | 30 | Nitrogen | 0.1 |
| Synthesis Example 2 | C2 | 100 | 50 | 70 | Nitrogen | 0.1 |
| Synthesis Example 3 | C3 | 60 | 75 | 40 | Ethylene | 0.7 |

Table 5

| Water-soluble resin (C) | Name of substance | Weight average molecular weight Mw | Ethylene modification rate | Eegree of saponification |
|---|---|---|---|---|
| | | | mol% | mol% |
| C1 | Polyvinyl alcohol | 13000 | 0 | 98 |
| C2 | Polyvinyl alcohol | 66000 | 0 | 98 |
| C3 | Ethylene-vinyl alcohol copolymer | 22000 | 10 | 98 |
| C4 | Polyacrylic acid copolymer | 50000 | - | - |
| C5 | Polyacrylamide | 100000 | - | - |
| C6 | Polyacrylamide copolymer | 100000 | - | - |

[Synthesis Example C4]

To a separable glass flask having an internal volume of 500 mL and equipped with a paddle stirrer, a thermometer, a reflux condenser, and 4 dropping devices, 76 g of deionized water was charged, and the temperature was raised to the boiling point reflux temperature. Then, under stirring, 166.04 g of a mixed solution of 6.76 g of a 37% by mass aqueous solution of sodium acrylate (hereinafter abbreviated as SA) and 159.28g of an 80% by mass aqueous solution of acrylic acid (hereinafter abbreviated as AA); 13.3 g of a 10% by mass aqueous solution of sodium persulfate (hereinafter abbreviated as NaPS); and 22.5 g of a 2% by mass aqueous solution of hydrogen peroxide (hereinafter abbreviated as HP), were dropped separately. The mixture of SA aqueous solution and AA aqueous solution took 140 minutes, the NaPS aqueous solution took 160 minutes, and the HP aqueous solution took 140 minutes for dropping. After completion of the dropping, the boiling point reflux temperature was maintained for 30 minutes to complete the polymerization, thereby obtaining a pale yellow and transparent aqueous solution of a water-soluble polyacrylic acid copolymer (C4) with a solid content of 47.4% by mass. The concentration of "solid content" herein refers to a value measured by a normal pressure heating drying method (sample weight: 1.0 g, drying temperature 110°C × 2 hours drying) in accordance with JIS K6828-1: 2003. Further, the weight average molecular weight was measured by gel permeation chromatography (GPC) under the conditions described above and was found to be 50,000.

[Synthesis Example C5]

To a four-necked flask equipped with a stirrer, a thermometer, a reflux condenser and a nitrogen gas inlet tube, 234.6 g of acrylamide and 960 g of ion-exchanged water were charged, and oxygen in the reaction system was purged by passing nitrogen gas. The inside of the system was heated to 40 °C, and 0.25 g of ammonium persulfate and 0.15 g of sodium bisulfite were added as polymerization initiators while stirring. After raising the temperature to 90 °C, the temperature was kept for 2 hours. After the polymerization was completed, 70 g of ion-exchanged water was added to obtain an aqueous solution of polyacrylamide (C5) with a solid content of 18.6% by mass. The concentration of "solid content" herein refers to a value measured by a normal pressure heating drying method (sample weight: 1.0 g, drying temperature 110°C × 2 hours drying) in accordance with JIS K6828-1: 2003. Further, the weight average molecular weight was measured by gel permeation chromatography (GPC) under the conditions described above and found to be 100,000.

[Synthesis example C6]

Under the same equipment conditions as Synthesis Example C5, 93.8 g of acrylamide, 960 g of ion-exchanged water, 93.8 g of hydroxyethyl acrylate, and 47.0 g of polyethylene glycol monomethacrylate ($C_3H_5COO(C_2H_4O)_4$-H) were charged, and oxygen in the reaction system was purged by passing nitrogen gas under the same conditions. The inside of the system was heated to 40 °C, and 0.25 g of ammonium persulfate and 0.15 g of sodium bisulfite were added as polymerization initiators while stirring. After raising the temperature to 90 °C, the temperature was kept for 2 hours. After the polymerization was completed, 70 g of ion-exchanged water was added to obtain an aqueous solution of polyacrylamide copolymer (C6) with a solid content of 18.6% by mass. The concentration of "solid content" herein refers to a value measured by a normal pressure heating drying method (sample weight: 1.0 g, drying temperature 110°C × 2 hours drying) in accordance with JIS K6828-1: 2003. Further, the weight average molecular weight was measured by gel permeation chromatography (GPC) under the conditions described above and found to be 100,000.

<Preparation of ether compound (D)>

Ether compounds shown in Table 6 were prepared.

Table 6

| Ether compound (D) | Name of substance |
|---|---|
| D1 | Polyethylene glycol |
| D2 | Polyoxyethylene lauryl ether |
| D3 | Carboxymethyl cellulose sodium |
| D4 | Hydroxyethylcellulose |

<Preparation of surface treatment agent>

The surface treatment agent of each of Examples and Comparative Examples was prepared by mixing the aqueous dispersion containing the composite prepared above, the water-soluble resin (C), and the ether compound (D) such that the solid content mass formulation ratio was as shown in Table 7-1, Table 7-2, and Table 7-3, and then adding deionized water such that the total amount was 1000 g with respect to 100 g of the solid content of the obtained mixture, and stirring. The "solid content" herein refers to a value measured by a normal pressure heating drying method (sample weight: 1.0 g, drying temperature 110°C × 2 hours drying) in accordance with JIS K6828-1: 2003. In addition, the solid content masses of (A), (B), and (E) in Table 7-1, Table 7-2, and Table 7-3 were calculated based on the solid content ratio of the raw materials when synthesizing the above composite. In addition, the composite and water-soluble resin (C) required for the preparation of the surface treatment agent of each Example and Comparative Example were additionally synthesized in necessary amounts.

Table 7-1

| | Sythesis Example X | Solid content mass (g) | | | | | | | | | | | Mass formulation ratio | | |
|---|---|---|---|---|---|---|---|---|---|---|---|---|---|---|---|
| | | (A) | | (B) | | (C) | | (D) | | (E) | | Total | (A) / (B) | {(A)+(B)} / {(A)+(B) +(C)+(D)} | (D) / {(A) +(B)+(C) +(D)} |
| | | Type | Mass | Type | Mass | Type | Mass | Type | Mass | Type | Mass | Mass | | | |
| Example 1 | X9 | A1 | 1.00 | B1 | 4.00 | C1 | 90.00 | D1 | 5.00 | - | - | 100.00 | 0.25 | 0.050 | 0.050 |
| Example 2 | X9 | A1 | 2.00 | B1 | 8.00 | C1 | 85.00 | D1 | 5.00 | - | - | 100.00 | 0.25 | 0.100 | 0.050 |
| Example 3 | X9 | A1 | 4.00 | B1 | 16.00 | C1 | 75.00 | D1 | 5.00 | - | - | 100.00 | 0.25 | 0.200 | 0.050 |
| Example 4 | X9 | A1 | 8.00 | B1 | 32.00 | C1 | 55.00 | D1 | 5.00 | - | - | 100.00 | 0.25 | 0.400 | 0.050 |
| Example 5 | X9 | A1 | 10.00 | B1 | 40.00 | C1 | 45.00 | D1 | 5.00 | - | - | 100.00 | 0.25 | 0.500 | 0.050 |
| Example 6 | X10 | A1 | 2.00 | B1 | 18.00 | C1 | 75.00 | D1 | 5.00 | - | - | 100.00 | 0.11 | 0.200 | 0.050 |
| Example 7 | X4 | A1 | 16.67 | B1 | 3.33 | C1 | 75.00 | D1 | 5.00 | - | - | 100.00 | 5.01 | 0.200 | 0.050 |
| Example 8 | X8 | A1 | 1.67 | B1 | 3.33 | C1 | 90.00 | D1 | 5.00 | - | - | 100.00 | 0.50 | 0.050 | 0.050 |
| Example 9 | X8 | A1 | 3.33 | B1 | 6.67 | C1 | 85.00 | D1 | 5.00 | - | - | 100.00 | 0.50 | 0.100 | 0.050 |
| Example 10 | X8 | A1 | 6.70 | B1 | 13.30 | C1 | 75.00 | D1 | 5.00 | - | - | 100.00 | 0.50 | 0.200 | 0.050 |
| Example 11 | X8 | A1 | 13.34 | B1 | 26.66 | C1 | 55.00 | D1 | 5.00 | - | - | 100.00 | 0.50 | 0.400 | 0.050 |
| Example 12 | X8 | A1 | 16.66 | B1 | 33.34 | C1 | 45.00 | D1 | 5.00 | - | - | 100.00 | 0.50 | 0.500 | 0.050 |
| Example 13 | X7 | A1 | 1.00 | B1 | 1.00 | C1 | 93.00 | D1 | 5.00 | - | - | 100.00 | 1.00 | 0.020 | 0.050 |
| Example 14 | X7 | A1 | 2.50 | B1 | 2.50 | C1 | 90.00 | D1 | 5.00 | - | - | 100.00 | 1.00 | 0.050 | 0.050 |
| Example 15 | X7 | A1 | 5.00 | B1 | 5.00 | C1 | 85.00 | D1 | 5.00 | - | - | 100.00 | 1.00 | 0.100 | 0.050 |
| Example 16 | X7 | A1 | 10.00 | B1 | 10.00 | C1 | 75.00 | D1 | 5.00 | - | - | 100.00 | 1.00 | 0.200 | 0.050 |
| Example 17 | X7 | A1 | 20.00 | B1 | 20.00 | C1 | 55.00 | D1 | 5.00 | - | - | 100.00 | 1.00 | 0.400 | 0.050 |
| Example 18 | X7 | A1 | 25.00 | B1 | 25.00 | C1 | 45.00 | D1 | 5.00 | - | - | 100.00 | 1.00 | 0.500 | 0.050 |
| Example 19 | X7 | A1 | 35.00 | B1 | 35.00 | C1 | 25.00 | D1 | 5.00 | - | - | 100.00 | 1.00 | 0.700 | 0.050 |
| Example 20 | X1 | A1 | 24.50 | B1 | 24.50 | C1 | 45.00 | D1 | 5.00 | E1 | 1.00 | 100.00 | 1.00 | 0.495 | 0.051 |
| Example 21 | X2 | A1 | 24.50 | B1 | 24.50 | C1 | 45.00 | D1 | 5.00 | E2 | 1.00 | 100.00 | 1.00 | 0.495 | 0.051 |
| Example 22 | X6 | A1 | 3.33 | B1 | 1.67 | C1 | 90.00 | D1 | 5.00 | - | - | 100.00 | 1.99 | 0.050 | 0.050 |
| Example 23 | X6 | A1 | 6.67 | B1 | 3.33 | C1 | 85.00 | D1 | 5.00 | - | - | 100.00 | 2.00 | 0.100 | 0.050 |
| Example 24 | X6 | A1 | 13.33 | B1 | 6.67 | C1 | 75.00 | D1 | 5.00 | - | - | 100.00 | 2.00 | 0.200 | 0.050 |

(continued)

| | Synthesis Example X | Solid content mass (g) | | | | | | | | | | | Mass formulation ratio | | |
| | | (A) | | (B) | | (C) | | (D) | | (E) | | Total | (A) / (B) | {(A)+(B)} / {(A)+(B)+(C)+(D)} | (D) / {(A)+(B)+(C)+(D)} |
| | | Type | Mass | Type | Mass | Type | Mass | Type | Mass | Type | Mass | Mass | | | |
|---|---|---|---|---|---|---|---|---|---|---|---|---|---|---|---|
| Example 25 | X6 | A1 | 26.66 | B1 | 13.34 | C1 | 55.00 | D1 | 5.00 | - | - | 100.00 | 2.00 | 0.400 | 0.050 |
| Example 26 | X6 | A1 | 33.33 | B1 | 16.67 | C1 | 45.00 | D1 | 5.00 | - | - | 100.00 | 2.00 | 0.500 | 0.050 |
| Example 27 | X5 | A1 | 4.00 | B1 | 1.00 | C1 | 90.00 | D1 | 5.00 | - | - | 100.00 | 4.00 | 0.050 | 0.050 |
| Example 28 | X5 | A1 | 8.00 | B1 | 2.00 | C1 | 85.00 | D1 | 5.00 | - | - | 100.00 | 4.00 | 0.100 | 0.050 |

Table 7-2

| Synthesis Example X | (A) Type | (A) Mass | (B) Type | (B) Mass | (C) Type | (C) Mass | (D) Type | (D) Mass | (E) Type | (E) Mass | Total Mass | (A)/(B) | {(A)+(B)}/{(A)+(B)+(C)+(D)} | (D)/{(A)+(B)+(C)+(D)} |
|---|---|---|---|---|---|---|---|---|---|---|---|---|---|---|
| Example 29 | X5 A1 | 16.00 | B1 | 4.00 | C1 | 75.00 | D1 | 5.00 | - | - | 100.00 | 4.00 | 0.200 | 0.050 |
| Example 30 | X5 A1 | 32.00 | B1 | 8.00 | C1 | 55.00 | D1 | 5.00 | - | - | 100.00 | 4.00 | 0.400 | 0.050 |
| Example 31 | X5 A1 | 40.00 | B1 | 10.00 | C1 | 45.00 | D1 | 5.00 | - | - | 100.00 | 4.00 | 0.500 | 0.050 |
| Example 32 | X12 A4 | 2.00 | B1 | 8.00 | C1 | 85.00 | D1 | 5.00 | - | - | 100.00 | 0.25 | 0.100 | 0.050 |
| Example 33 | X12 A4 | 4.00 | B1 | 16.00 | C1 | 75.00 | D1 | 5.00 | - | - | 100.00 | 0.25 | 0.200 | 0.050 |
| Example 34 | X12 A4 | 8.00 | B1 | 32.00 | C1 | 55.00 | D1 | 5.00 | - | - | 100.00 | 0.25 | 0.400 | 0.050 |
| Example 35 | X13 A4 | 5.00 | B1 | 5.00 | C1 | 85.00 | D1 | 5.00 | - | - | 100.00 | 1.00 | 0.100 | 0.050 |
| Example 36 | X13 A4 | 10.00 | B1 | 10.00 | C1 | 75.00 | D1 | 5.00 | - | - | 100.00 | 1.00 | 0.200 | 0.050 |
| Example 37 | X13 A4 | 20.00 | B1 | 20.00 | C1 | 55.00 | D1 | 5.00 | - | - | 100.00 | 1.00 | 0.400 | 0.050 |
| Example 38 | X14 A4 | 8.00 | B1 | 2.00 | C1 | 85.00 | D1 | 5.00 | - | - | 100.00 | 4.00 | 0.100 | 0.050 |
| Example 39 | X14 A4 | 16.00 | B1 | 4.00 | C1 | 75.00 | D1 | 5.00 | - | - | 100.00 | 4.00 | 0.200 | 0.050 |
| Example 40 | X14 A4 | 32.00 | B1 | 8.00 | C1 | 55.00 | D1 | 5.00 | - | - | 100.00 | 4.00 | 0.400 | 0.050 |
| Example 41 | X15 A2 | 10.00 | B1 | 10.00 | C1 | 75.00 | D1 | 5.00 | - | - | 100.00 | 1.00 | 0.200 | 0.050 |
| Example 42 | X16 A3 | 10.00 | B1 | 10.00 | C1 | 75.00 | D1 | 5.00 | - | - | 100.00 | 1.00 | 0.200 | 0.050 |
| Example 43 | X17 A5 | 10.00 | B1 | 10.00 | C1 | 75.00 | D1 | 5.00 | - | - | 100.00 | 1.00 | 0.200 | 0.050 |
| Example 44 | X7 A1 | 10.00 | B1 | 10.00 | C2 | 75.00 | D1 | 5.00 | - | - | 100.00 | 1.00 | 0.200 | 0.050 |
| Example 45 | X7 A1 | 10.00 | B1 | 10.00 | C3 | 75.00 | D1 | 5.00 | - | - | 100.00 | 1.00 | 0.200 | 0.050 |
| Example 46 | X7 A1 | 10.00 | B1 | 10.00 | C4 | 75.00 | D1 | 5.00 | - | - | 100.00 | 1.00 | 0.200 | 0.050 |
| Example 47 | X7 A1 | 10.00 | B1 | 10.00 | C5 | 75.00 | D1 | 5.00 | - | - | 100.00 | 1.00 | 0.200 | 0.050 |
| Example 48 | X7 A1 | 10.20 | B1 | 10.20 | C1 | 78.60 | D2 | 1.00 | - | - | 100.00 | 1.00 | 0.204 | 0.010 |
| Example 49 | X7 A1 | 10.00 | B1 | 10.00 | C1 | 75.00 | D2 | 5.00 | - | - | 100.00 | 1.00 | 0.200 | 0.050 |
| Example 50 | X7 A1 | 10.00 | B1 | 10.00 | C1 | 70.00 | D2 | 10.00 | - | - | 100.00 | 1.00 | 0.200 | 0.100 |
| Example 51 | X7 A1 | 10.00 | B1 | 10.00 | C1 | 60.00 | D2 | 20.00 | - | - | 100.00 | 1.00 | 0.200 | 0.200 |

(continued)

| | Sythesis Example X | (A) | | (B) | | (C) | | (D) | | (E) | | Total | Mass formulation ratio | | |
|---|---|---|---|---|---|---|---|---|---|---|---|---|---|---|---|
| | | Type | Mass | Type | Mass | Type | Mass | Type | Mass | Type | Mass | Mass | (A) / (B) | {(A)+(B)} / {(A)+(B)+(C)+(D)} | (D)/ {(A)+(B)+(C)+(D)} |
| Example 52 | X7 | A1 | 10.00 | B1 | 10.00 | C1 | 50.00 | D2 | 30.00 | - | - | 100.00 | 1.00 | 0.200 | 0.300 |
| Example 53 | X7 | A1 | 7.50 | B1 | 7.50 | C1 | 75.00 | D3 | 10.00 | - | - | 100.00 | 1.00 | 0.150 | 0.100 |
| Example 54 | X7 | A1 | 7.50 | B1 | 7.50 | C1 | 75.00 | D4 | 10.00 | - | - | 100.00 | 1.00 | 0.150 | 0.100 |

Table 7-3

| | Sythesis Example X | Solid content mass (g) | | | | | | | | | | Total | Mass formulation ratio | | |
|---|---|---|---|---|---|---|---|---|---|---|---|---|---|---|---|
| | | (A) | | (B) | | (C) | | (D) | | (E) | | | (A) / (B) | {(A)+(B)} / {(A)+(B) +(C)+(D)} | (D) / {(A) +(B)+(C) +(D)} |
| | | Type | Mass | Type | Mass | Type | Mass | Type | Mass | Type | Mass | Mass | | | |
| Comparative Example 1 | X3 | A1 | 100.00 | - | 0.00 | - | 0.00 | - | 0.00 | - | - | 100.00 | - | 1.000 | 0.000 |
| Comparative Example 2 | X11 | - | 0.00 | B1 | 100.00 | - | 0.00 | - | 0.00 | - | - | 100.00 | 0.00 | 1.000 | 0.000 |
| Comparative Example 3 | - | - | 0.00 | - | 0.00 | C1 | 100.00 | - | 0.00 | - | - | 100.00 | - | 0.000 | 0.000 |
| Comparative Example 4 | X7 | A1 | 47.50 | B1 | 47.50 | - | 0.00 | D1 | 5.00 | - | - | 100.00 | 1.00 | 0.950 | 0.050 |
| Comparative Example 5 | X3 | A1 | 50.00 | - | 0.00 | C1 | 45.00 | D1 | 5.00 | - | - | 100.00 | - | 0.500 | 0.050 |
| Comparative Example 6 | X11 | - | 0.00 | B1 | 100.00 | C1 | 0.00 | - | 0.00 | - | - | 100.00 | 0.00 | 1.000 | 0.000 |
| Comparative Example 7 | X18 | A6 | 10.00 | B1 | 10.00 | C1 | 75.00 | D1 | 5.00 | - | - | 100.00 | 1.00 | 0.200 | 0.050 |
| Comparative Example 8 | - | - | 0.00 | - | 0.00 | C1 | 95.00 | D1 | 5.00 | - | - | 100.00 | - | 0.000 | 0.050 |
| Comparative Example 9 | X7 | A1 | 10.00 | B1 | 10.00 | C1 | 80.00 | - | 0.00 | - | - | 100.00 | 1.00 | 0.200 | 0.000 |
| Comparative Example 10 | X10 | A1 | 0.05 | B1 | 0.45 | C1 | 94.50 | D1 | 5.00 | - | - | 100.00 | 0.11 | 0.005 | 0.050 |
| Comparative Example 11 | X10 | A1 | 8.00 | B1 | 72.00 | C1 | 15.00 | D1 | 5.00 | - | - | 100.00 | 0.11 | 0.800 | 0.050 |
| Comparative Example 12 | X7 | A1 | 0.25 | B1 | 0.25 | C1 | 94.50 | D1 | 5.00 | - | - | 100.00 | 1.00 | 0.005 | 0.050 |
| Comparative Example 13 | X7 | A1 | 40.00 | B1 | 40.00 | C1 | 15.00 | D1 | 5.00 | - | - | 100.00 | 1.00 | 0.800 | 0.050 |
| Comparative Example 14 | X4 | A1 | 0.42 | B1 | 0.08 | C1 | 94.50 | D1 | 5.00 | - | - | 100.00 | 5.25 | 0.005 | 0.050 |
| Comparative Example 15 | X4 | A1 | 66.66 | B1 | 13.34 | C1 | 15.00 | D1 | 5.00 | - | - | 100.00 | 5.00 | 0.800 | 0.050 |
| Comparative Example 16 | X19 | A7 | 62.00 | B2 | 15.00 | C6 | 20.00 | - | 0 | E3 | 3.00 | 100.00 | 4.13 | 0.794 | 0.000 |

<Preparation of test materials>

An aluminum test piece (A1050 produced by Paltech Corporation, dimensions: 70mm × 150 mm, plate thickness: 0.8 mm) was prepared.

<Formation of surface treatment film>

The test material was immersed in a treatment bath in which an alkaline degreaser "Fine Cleaner 315E" (produced by Nihon Parkerizing Co., Ltd.) was adjusted to a concentration of 20 g/L and the bath temperature was adjusted to 60 °C for 3 minutes to remove dust and oil adhering to the surface, and then the alkali remaining on the surface was washed out with city water.

After immersing the cleaned test material in the surface treatment agent (liquid temperature: 25 °C) according to each Example and Comparative Example for 30 seconds, a surface treatment film was formed on the surface of the test material by hanging it in a blow dryer adjusted to 150 °C and heating and drying it for 6 minutes. Thereafter, an evaluation sample was prepared by cooling to room temperature. The solid content concentration was adjusted such that the mass of the surface treatment film was 0.8 g/m². In addition, a number of evaluation samples was prepared as necessary for performing the following evaluations.

<Hydrophilicity evaluation method>

1 μL of deionized water was dropped onto the evaluation sample prepared above, and the contact angle of the formed water droplet was measured using a contact angle meter (DM-501 manufactured by Kyowa Interface Science Co., Ltd.). The initial hydrophilicity was determined by the contact angle of the evaluation sample cooled to room temperature after hydrophilic treatment, and after the evaluation sample was immersed in deionized water for 240 hours, it was dried for 1 hour in a blower dryer adjusted to 50 °C, and the contact angle after cooling to room temperature was defined as hydrophilicity after durability. The obtained contact angles were rated according to the criteria shown below, and a rating of 3 or more was considered to be acceptable as hydrophilic, which is the objective of the present invention. The results are shown in Table 8-1, Table 8-2, and Table 8-3.

<Hydrophilicity rating criteria>

5 points: less than 10°
4 points: 10° or more, less than 20°
3 points: 20° or more, less than 30°
2 points: 30° or more, less than 40°
1 point: 40° or more

<Corrosion resistance evaluation method>

(1) SST

The evaluation sample prepared above was exposed for 240 hours in accordance with the salt spray test method (JIS Z2371: 2015), and the rust area (ratio of white rust area to the total area) of the test material was evaluated by visual observation. The evaluation criteria are shown below. Corrosion resistance was considered to be good if the evaluation standard value was 3 or more points. The results are shown in Table 8-1, Table 8-2, and Table 8-3.

<Evaluation criteria>

5 points: white rust area of less than 10%
4 points: white rust area of 10% or more, less than 30%
3 points: white rust area of 30% or more, less than 50%
2 points: white rust area of 50% or more, less than 70%
1 point: white rust area of 70% or more

(2) SWAAT

Based on the SWAAT test (ASTM G85-A3), an aqueous solution of artificial seawater solution (ASTM D1141-98) adjusted to pH 3.0 with acetic acid was prepared. The evaluation sample prepared above was exposed to 60 cycles test, each cycle consisting of artificial seawater solution spraying (49 °C × 30 minutes), followed by wet exposure (49 °C × 90 minutes), a total of 120 minutes. Thereafter, the white rust was removed by immersing it in a 2% by mass chromic acid aqueous solution at 95 °C for 10 minutes. The size and number of holes were evaluated using the rating number method based on JIS Z2371: 2015. If the evaluation standard value was 3 points or more, the pitting corrosion resistance was considered to be good. The results are shown in Table 8-1, Table 8-2, and Table 8-3.

<Evaluation criteria>

5 points: RN of 9.5 or higher
4 points: RN of 9.3 or more and less than 9.5
3 points: RN of 9 or more and less than 9.3
2 points: RN of 8 or more and less than 9
1 point: RN is less than 8

<Odor evaluation method>

The odor immediately after the preparation of the evaluation sample prepared above was taken as the initial odor, and the odor after the evaluation sample was immersed in deionized water for 240 hours, dried for 1 hour in a blow dryer adjusted to 50 °C, and then cooled to room temperature was taken as the odor after durability. The obtained odor was evaluated according to the criteria shown below. The evaluation criteria were based on odor intensity when isovaleric acid, which is used as a reference odor for odor components, was used at a specified concentration. A sample with 3 points or more based on the evaluation standard value was deemed to have achieved the odor suppression effect, which is the objective of the present invention, and was considered to be acceptable. The results are shown in Table 8-1, Table 8-2, and Table 8-3.

<Odor evaluation criteria>

5 points: no odor
4 points: odor that is barely felt (detection threshold: isovaleric acid concentration: 0.05 $\mu$g/L)
3 points: weak odor that is recognizable (detection threshold: isovaleric acid concentration: 0.4 $\mu$g/L)
2 points: Odor that can be easily felt (detection threshold: isovaleric acid concentration: 4 $\mu$g/L)
1 point: Strong odor (detection threshold: isovaleric acid concentration: 30$\mu$g/L)

<Dispersion stability evaluation method>

The surface treatment agents according to Examples and Comparative Examples were stored in a constant temperature bath at 40 °C for one week, and the appearance of the liquid after storage was visually confirmed and rated as shown below. If the evaluation standard value was 3 points or more, it was considered as acceptable. In addition, as for dispersion stability, even if precipitation occurred, when it was used after thorough stirring and dispersion, and if the other performance evaluation results were acceptable, it was considered to be acceptable. The results are shown in Table 8-1, Table 8-2, and Table 8-3.

<Rating criteria for dispersion stability>

5 points: No precipitation
3 points: A small amount of precipitate was formed at the bottom of the container
1 point: A large amount of precipitate was formed, covering the entire bottom of the container

Table 8-1

| | Hydrophilicity | | Odor | | Corrosion resistance | | Dispersion stability | Total score |
|---|---|---|---|---|---|---|---|---|
| | Initial | After durability | Initial | After durability | SST | SWAAT | | |
| Example 1 | 4 | 3 | 5 | 4 | 3 | 3 | 5 | 27 |
| Example 2 | 5 | 3 | 5 | 5 | 4 | 3 | 5 | 30 |
| Example 3 | 5 | 4 | 5 | 5 | 5 | 3 | 5 | 32 |
| Example 4 | 5 | 3 | 5 | 5 | 4 | 3 | 5 | 30 |
| Example 5 | 4 | 3 | 4 | 4 | 4 | 3 | 3 | 25 |
| Example 6 | 4 | 3 | 5 | 3 | 3 | 3 | 3 | 24 |
| Example 7 | 5 | 3 | 3 | 3 | 4 | 3 | 5 | 26 |
| Example 8 | 4 | 3 | 5 | 5 | 3 | 3 | 5 | 28 |
| Example 9 | 5 | 4 | 5 | 5 | 4 | 4 | 5 | 32 |
| Example 10 | 5 | 4 | 5 | 5 | 5 | 5 | 5 | 34 |
| Example 11 | 5 | 4 | 4 | 4 | 5 | 5 | 5 | 32 |
| Example 12 | 4 | 4 | 4 | 4 | 5 | 3 | 3 | 27 |
| Example 13 | 4 | 3 | 4 | 3 | 3 | 3 | 5 | 25 |
| Example 14 | 4 | 4 | 5 | 5 | 3 | 4 | 5 | 30 |
| Example 15 | 5 | 5 | 5 | 5 | 4 | 5 | 5 | 34 |
| Example 16 | 5 | 5 | 5 | 5 | 5 | 5 | 5 | 35 |
| Example 17 | 5 | 5 | 5 | 5 | 5 | 5 | 5 | 35 |
| Example 18 | 4 | 4 | 4 | 4 | 5 | 4 | 3 | 28 |
| Example 19 | 4 | 3 | 3 | 3 | 3 | 3 | 3 | 22 |
| Example 20 | 4 | 4 | 4 | 4 | 5 | 4 | 5 | 30 |
| Example 21 | 4 | 4 | 4 | 4 | 5 | 4 | 5 | 30 |
| Example 22 | 5 | 4 | 4 | 4 | 4 | 4 | 5 | 30 |
| Example 23 | 5 | 5 | 5 | 5 | 5 | 3 | 5 | 33 |
| Example 24 | 5 | 5 | 5 | 5 | 5 | 5 | 5 | 35 |
| Example 25 | 5 | 5 | 5 | 5 | 5 | 5 | 5 | 35 |
| Example 26 | 5 | 4 | 4 | 4 | 5 | 5 | 3 | 30 |
| Example 27 | 5 | 5 | 5 | 5 | 4 | 3 | 5 | 32 |
| Example 28 | 5 | 5 | 5 | 4 | 5 | 3 | 5 | 32 |

Table 8-2

| | Hydrophilicity | | Odor | | Corrosion resistance | | Dispersion stability | Total score |
|---|---|---|---|---|---|---|---|---|
| | Initial | After durability | Initial | After durability | SST | SWAAT | | |
| Example 29 | 5 | 5 | 4 | 3 | 5 | 4 | 5 | 31 |
| Example 30 | 5 | 4 | 3 | 4 | 5 | 3 | 3 | 27 |
| Example 31 | 5 | 3 | 3 | 3 | 5 | 3 | 3 | 25 |
| Example 32 | 5 | 4 | 5 | 5 | 3 | 3 | 5 | 30 |
| Example 33 | 5 | 5 | 5 | 5 | 4 | 3 | 5 | 32 |
| Example 34 | 5 | 3 | 4 | 4 | 4 | 3 | 3 | 26 |

(continued)

| | Hydrophilicity | | Odor | | Corrosion resistance | | Dispersion stability | Total score |
|---|---|---|---|---|---|---|---|---|
| | Initial | After durability | Initial | After durability | SST | SWAAT | | |
| Example 35 | 5 | 4 | 5 | 5 | 5 | 5 | 5 | 34 |
| Example 36 | 5 | 4 | 5 | 5 | 5 | 5 | 5 | 34 |
| Example 37 | 5 | 4 | 3 | 3 | 4 | 5 | 3 | 27 |
| Example 38 | 5 | 4 | 5 | 5 | 5 | 5 | 5 | 34 |
| Example 39 | 5 | 4 | 4 | 4 | 5 | 4 | 5 | 31 |
| Example 40 | 5 | 3 | 3 | 3 | 3 | 4 | 3 | 24 |
| Example 41 | 5 | 5 | 5 | 5 | 5 | 5 | 5 | 35 |
| Example 42 | 5 | 5 | 5 | 5 | 5 | 5 | 5 | 35 |
| Example 43 | 5 | 5 | 5 | 5 | 5 | 5 | 5 | 35 |
| Example 44 | 5 | 5 | 5 | 5 | 5 | 5 | 5 | 35 |
| Example 45 | 5 | 5 | 5 | 5 | 5 | 5 | 5 | 35 |
| Example 46 | 5 | 5 | 5 | 5 | 5 | 5 | 5 | 35 |
| Example 47 | 5 | 5 | 5 | 5 | 5 | 5 | 5 | 35 |
| Example 48 | 4 | 5 | 5 | 5 | 5 | 5 | 5 | 34 |
| Example 49 | 5 | 5 | 5 | 5 | 5 | 5 | 5 | 35 |
| Example 50 | 5 | 5 | 4 | 5 | 3 | 4 | 5 | 31 |
| Example 51 | 5 | 3 | 5 | 3 | 3 | 4 | 5 | 28 |
| Example 52 | 5 | 3 | 4 | 4 | 3 | 3 | 3 | 25 |
| Example 53 | 5 | 5 | 5 | 5 | 5 | 5 | 5 | 35 |
| Example 54 | 5 | 5 | 5 | 5 | 5 | 5 | 5 | 35 |

Table 8-3

| | Hydrophilicity | | Odor | | Corrosion resistance | | Dispersion stability | Total score |
|---|---|---|---|---|---|---|---|---|
| | Initial | After durability | Initial | After durability | SST | SWAAT | | |
| Comparative Example 1 | 4 | 2 | 1 | 1 | 2 | 2 | 5 | 17 |
| Comparative Example 2 | 1 | 1 | 3 | 3 | 3 | 3 | 5 | 19 |
| Comparative Example 3 | 1 | 1 | 4 | 2 | 1 | 1 | 3 | 13 |
| Comparative Example 4 | 3 | 2 | 3 | 2 | 2 | 2 | 3 | 17 |
| Comparative Example 5 | 3 | 3 | 1 | 1 | 4 | 2 | 3 | 17 |
| Comparative Example 6 | 1 | 1 | 4 | 4 | 2 | 1 | 3 | 16 |
| Comparative Example 7 | 3 | 2 | 3 | 3 | 1 | 1 | 3 | 16 |
| Comparative Example 8 | 4 | 2 | 4 | 3 | 1 | 1 | 5 | 20 |

(continued)

| | Hydrophilicity | | Odor | | Corrosion resistance | | Dispersion stability | Total score |
|---|---|---|---|---|---|---|---|---|
| | Initial | After durability | Initial | After durability | SST | SWAAT | | |
| Comparative Example 9 | 2 | 3 | 5 | 5 | 5 | 5 | 5 | 30 |
| Comparative Example 10 | 4 | 2 | 5 | 3 | 2 | 1 | 5 | 22 |
| Comparative Example 11 | 3 | 1 | 5 | 1 | 2 | 1 | 3 | 16 |
| Comparative Example 12 | 3 | 2 | 3 | 2 | 1 | 1 | 3 | 15 |
| Comparative Example 13 | 3 | 2 | 2 | 2 | 2 | 2 | 1 | 14 |
| Comparative Example 14 | 5 | 2 | 3 | 3 | 3 | 2 | 5 | 23 |
| Comparative Example 15 | 5 | 3 | 1 | 1 | 4 | 3 | 3 | 20 |
| Comparative Example 16 | 4 | 3 | 2 | 1 | 2 | 2 | 3 | 17 |

## Claims

1. A surface treatment agent, comprising:

   one or more selected from water-soluble inorganic oxides and salts thereof (A); one or more selected from hydrolysates and condensates of organoalkoxysilane (B); water-soluble resin (C); ether compound (D); and water and/or water-miscible solvent;
   wherein assuming a total mass of the one or more selected from water-soluble inorganic oxides and salts thereof (A), a total mass of the one or more selected from hydrolysates and condensates of organoalkoxysilane (B), a mass of the water-soluble resin (C), and a mass of the ether compound (D) are $M_A$, $M_B$, $M_C$ and $M_D$, respectively, $(M_A + M_B) / (M_A + M_B + M_C + M_D) = 0.01$ to $0.7$ is satisfied.

2. The surface treatment agent according to claim 1, wherein the one or more selected from water-soluble inorganic oxides and salts thereof (A) is alkaline and comprises one element (M1) selected from Si, V, Zr, Mo, Ti, and W, and one cationic component (M2) selected from Na, K, Li, and $NH_4$, and wherein a molar ratio (M2) / (M1) of (M2) to (M1) is 0.1 to 8.0.

3. The surface treatment agent according to claim 1 or 2, wherein the one or more selected from the water-soluble inorganic oxides and salts thereof (A) is represented by a general formula $Me_2O \cdot nSiO_2$, in which Me is one cationic component selected from Na, K, Li, and $NH_4$, and n is 0.5 to 8.0.

4. The surface treatment agent according to any one of claims 1 to 3, wherein assuming the total mass of the one or more selected from the water-soluble inorganic oxides and salts thereof (A) is $M_A$, and the total mass of the one or more selected from hydrolysates and condensates of organoalkoxysilane (B) is $M_B$, $(M_A) / (M_B) = 0.25$ to $4.0$ is satisfied.

5. The surface treatment agent according to any one of claims 1 to 4, wherein the one or more selected from the water-soluble inorganic oxides and salts thereof (A) and the one or more selected from hydrolysates and condensates of organoalkoxysilane (B) form a composite, and a median diameter of the composite measured by a dynamic light scattering method is 10 nm or less.

6. The surface treatment agent according to any one of claims 1 to 5, wherein the water-soluble resin (C) comprises: one or more selected from a water-soluble resin having one or more functional groups selected from an amide group, a hydroxyl group, and a carboxyl group; or a water-soluble resin having an amide bond in its skeleton.

7.  The surface treatment agent according to any one of claims 1 to 6, wherein assuming the total mass of the one or more selected from the water-soluble inorganic oxides and salts thereof (A) is $M_A$, the total mass of the one or more selected from hydrolysates and condensates of organoalkoxysilane (B) is $M_B$, the mass of the water-soluble resin (C) is Mc, and the mass of the ether compound (D) is $M_D$, respectively, $M_D / (M_A + M_B + M_C + M_D) = 0.001$ to $0.2$ is satisfied.

8.  A method for surface treating a metal material, comprising bringing the surface treatment agent according to any one of claims 1 to 7 into contact with the metal material and then drying it.

9.  A method for producing a surface treated metal material, comprising bringing the surface treatment agent according to any one of claims 1 to 7 into contact with a metal material and then drying it.

10. A heat exchanger using the surface treated metal material obtained by the method according to claim 9.

11. A method for surface treating a heat exchanger, comprising bringing the surface treatment agent according to any one of claims 1 to 7 into contact with the heat exchanger and then drying it.

12. A method for producing a surface treated heat exchanger, comprising bringing the surface treatment agent according to any one of claims 1 to 7 into contact with a heat exchanger and then drying it.

13. A surface treated heat exchanger obtained by the method according to claim 12.

## INTERNATIONAL SEARCH REPORT

| International application No. |
| --- |
| **PCT/JP2023/010156** |

**A.  CLASSIFICATION OF SUBJECT MATTER**

*B05D 7/14*(2006.01)i; *B05D 7/24*(2006.01)i; *C08G 77/42*(2006.01)i; *C09D 183/04*(2006.01)i; *C09D 201/00*(2006.01)i; *C08G 79/00*(2006.01)i; *C09D 7/61*(2018.01)i; *C09D 7/63*(2018.01)i; *C09D 7/65*(2018.01)i; *C23C 26/00*(2006.01)i; *C09K 3/00*(2006.01)i

FI:  C09D201/00; C23C26/00 A; C08G77/42; C08G79/00; B05D7/14 Z; B05D7/24 303E; B05D7/24 302Y; B05D7/24 302X; C09D7/63; C09D7/61; C09D7/65; C09D183/04; C09K3/00 R

According to International Patent Classification (IPC) or to both national classification and IPC

**B.  FIELDS SEARCHED**

Minimum documentation searched (classification system followed by classification symbols)

B05D7/14; B05D7/24; C08G77/42; C09D183/04; C09D201/00; C08G79/00; C09D7/61; C09D7/63; C09D7/65; C23C26/00; C09K3/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
| --- | --- | --- |
| Y | JP 1-249863 A (KANSAI PAINT CO., LTD.) 05 October 1989 (1989-10-05) claim 1, table 1 | 1-4, 6-13 |
| A | entire text | 5 |
| Y | JP 7-41696 A (MITSUBISHI ALUMINUM CO., LTD.) 10 February 1995 (1995-02-10) claim 1, paragraph [0009] | 1-4, 6-13 |
| A | entire text | 5 |
| Y | JP 11-23175 A (MITSUBISHI ALUMINUM CO., LTD.) 26 January 1999 (1999-01-26) document 3, claim 1, paragraph [0009] | 1-4, 6-13 |
| A | entire text | 5 |
| Y | JP 2014-29249 A (MITSUBISHI ALUMINUM CO., LTD.) 13 February 2014 (2014-02-13) claim 1, paragraph [0009] | 1-4, 6-13 |
| A | entire text | 5 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **22 May 2023** | **06 June 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

# EP 4 501 471 A1

## INTERNATIONAL SEARCH REPORT

| International application No. |
| --- |
| **PCT/JP2023/010156** |

**C.    DOCUMENTS CONSIDERED TO BE RELEVANT**

| Category* | Citation of document, with indication, where appropriate, of the relevant passages | Relevant to claim No. |
| --- | --- | --- |
| Y | JP 2016-111879 A (CANON INC.) 20 June 2016 (2016-06-20)<br>claim 1, paragraph [0012] | 1-4, 6-13 |
| A | entire text | 5 |
| Y | JP 8-200983 A (KOBE STEEL, LTD.) 09 August 1996 (1996-08-09)<br>claim 1, paragraph [0003] | 1-4, 6-13 |
| A | entire text | 5 |
| Y | JP 10-292128 A (KOBE STEEL, LTD.) 04 November 1998 (1998-11-04)<br>claim 1, paragraph [0001] | 1-4, 6-13 |
| A | entire text | 5 |
| Y | JP 6-93209 A (SANYO CHEMICAL INDUSTRIES, LTD.) 05 April 1994 (1994-04-05)<br>claim 1, table 1, examples 1-3 | 1-4, 6-13 |
| A | entire text | 5 |
| A | WO 2016/021071 A1 (NIHON PARKERIZING CO., LTD.) 11 February 2016 (2016-02-11)<br>entire text | 1-13 |
| A | WO 2014/147782 A1 (NIHON PARKERIZING CO., LTD.) 25 September 2014 (2014-09-25)<br>entire text | 1-13 |

Form PCT/ISA/210 (second sheet) (January 2015)

30

## INTERNATIONAL SEARCH REPORT
### Information on patent family members

International application No.

**PCT/JP2023/010156**

| Patent document cited in search report | | | Publication date (day/month/year) | Patent family member(s) | | | Publication date (day/month/year) |
|---|---|---|---|---|---|---|---|
| JP | 1-249863 | A | 05 October 1989 | (Family: none) | | | |
| JP | 7-41696 | A | 10 February 1995 | (Family: none) | | | |
| JP | 11-23175 | A | 26 January 1999 | (Family: none) | | | |
| JP | 2014-29249 | A | 13 February 2014 | (Family: none) | | | |
| JP | 2016-111879 | A | 20 June 2016 | US 2016/0164306 A1 claim 1, paragraph [0002] | | | |
| JP | 8-200983 | A | 09 August 1996 | (Family: none) | | | |
| JP | 10-292128 | A | 04 November 1998 | (Family: none) | | | |
| JP | 6-93209 | A | 05 April 1994 | (Family: none) | | | |
| WO | 2016/021071 | A1 | 11 February 2016 | US 2017/0226345 A1<br>EP 3178897 A1<br>KR 10-2017-0038047 A<br>CN 106661420 A | | | |
| WO | 2014/147782 | A1 | 25 September 2014 | US 2015/0232681 A1<br>EP 2977417 A1<br>KR 10-2015-0008502 A<br>CN 104411788 A | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 59013078 A
- JP 2000328038 A
- JP 2001323250 A
- JP H01249863 B